# EUROPEAN PATENT SPECIFICATION

(11) **EP 1 680 995 B1**
(45) Date of publication and mention of the grant of the patent: **05.03.2008**
(21) Application number: 06100290.3
(22) Date of filing: 12.01.2006
(51) Int. Cl.: A47J 37/06, A47J 37/07

(54) **Cooking apparatus**
Kochvorrichtung
Appareil de cuisson

(30) Priority: 13.01.2005 KR 2005003311
(43) Date of publication of application: 19.07.2006
(73) Proprietor: Samsung Electronics Co., Ltd., Suwon-si, Gyeonggi-Do (KR)
(72) Inventor: JANG, Seong-deog, Yeongtong-gu Suwon-si Gyeonggi-do (KR); KANG, Han-seong, Taean-eup Hwaseong-si Gyeonggi-do (KR); KWON, Yong-hyun, Suwon-si Gyeonggi-do (KR); KIM, Chul, Yongin-si Gyeonggi-do (KR); SUNG, Han-jun, Yongin-si Gyeonggi-do (KR); LEE, Tae-uk, Suwon-si Gyeonggi-do (KR)
(74) Representative: Grey, Ian Michael

(56) References cited:
- EP-A- 1 444 942
- GB-A- 2 367 887
- US-A- 3 304 406
- US-A- 5 805 769
- US-A- 6 013 900

## Description

The present invention relates to a cooking apparatus comprising a cooking apparatus comprising a housing, a grill supported on the housing, at least one heating element provided within the housing below the grill, a heat reflecting member being disposed within the housing below the grill to reflect heat from the at least one heating element towards the grill, and a cooling fan to draw air from outside the cooking apparatus and blow it toward the heat reflecting member in order to cool the heat reflecting member. Such a cooking apparatus is known from EP 1444942A.

The term "grilling" refers to a method of broiling foods on a gridiron or directly over a fire or other heat source and household grill devices may use electricity or gas.

An electric grill device cooks food by using an electric heater as a heating source and a main body of the electric grill device comprises a grill part for directly contacting and cooking food. Heat from the electric heater is reflected to the grill part by a grill reflecting member. If the temperature of the grill reflecting member rises excessively, fumes are generated as oil or residues from the food on the grill reflecting member are burnt.

An electric cooking apparatus disclosed in Korean Utility Model Second Publication No. 1989-0001583 includes a guiding rib having ventilation holes in three directions in a mounting part of a cooling fan, for covering a motor bracket to form a casing, and an air guiding blade connected with each ventilation hole forming an air transferring path. However, an interrupting wall is provided in a side plate of a heat sink which interrupts the air flow thererto. Therefore, the cooling efficiency of the apparatus is significantly decreased because the cooling air flow cannot directly cool the parts which need cooling.

Therefore, it is an object of the present invention to provide a cooking apparatus that substantially alleviates or overcomes the problems mentioned above.

Accordingly, the present invention is characterised by the housing including an inner casing and an outer casing, the inner casing and the outer casing having a space therebetween to define a pathway along which air that has been blown towards the heat reflecting member subsequently flows to be discharged to outside the cooking apparatus, thereby cooling the inner casing and the outer casing.

The fan may be disposed below the heat reflecting member to blow air drawn from outside the cooking apparatus towards an underside of the heat reflecting member.

In a preferred embodiment, the heat reflecting member is disposed within the inner casing and the fan is disposed in an aperture extending through the inner casing and the outer casing.

Preferably, the inner casing includes a plurality of apertures therethrough such that air blown by the fan can pass from within the inner casing to the space between the inner casing and the outer casing.

Preferably, the outer casing includes a plurality of apertures therethrough such that air within the space between the inner casing and the outer casing can be discharged to outside the cooking apparatus to enable the housing to be cooled.

A preferred embodiment of the present invention will now be described, by way of example only, with reference to the accompanying drawings, in which:
Figure 1 is an exploded perspective view illustrating a cooking apparatus according to the present invention; and
Figure 2 is an assembled sectional view of Figure 1.

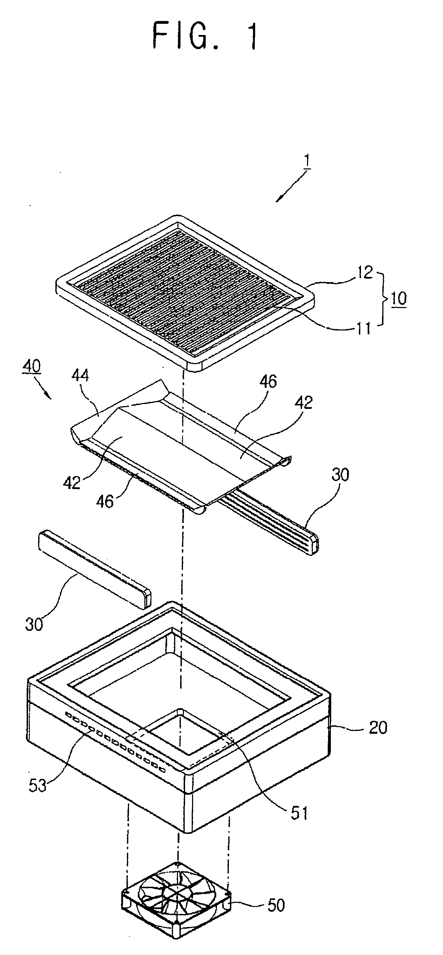

A cooking apparatus 1 according to an embodiment of the present invention is shown in Figure 1 and comprises a grill part 10 on which food is cooked, and a grill housing 20 coupled with a lower part of the grill part 10 having a plurality of components therein as described below.

The grill part 10 which directly contacts and cooks food, is coupled with an upper part of the grill housing 20 and comprises a plurality of spaced grill bars 11 to enable food to rest thereon, and a support frame 12 supporting the plurality of grill bars 11 around its edge.

A lower part of the grill part 10 is mounted over an upper opening part of the grill housing 20 and a heating space is formed inside the grill housing 20. A pair of electric heaters 30 provide a heating source within the grill housing 20, and a grill reflecting member 40 is positioned to reflect heat from the electric heaters 30 to the grill part 10.

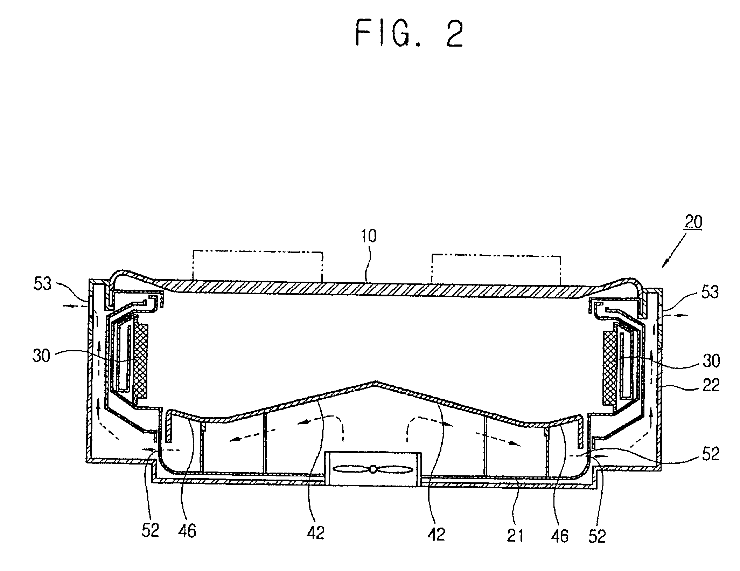

Referring to Figure 2, the grill housing 20 comprises an inner casing 21 forming the heating space inside of the grill housing 20 and a outer casing 22 disposed such that a space is formed between the inner casing 21 and the outer casing 22. A fan mounting hole 51 is formed in a lower area of the grill housing 20 which passes through the inner casing 21 and the outer casing 22. A cooling fan 50 is mounted in the fan mounting hole 51 for cooling the grill housing 20 and the grill reflecting member 40.

The inner casing 21 comprises through holes 52 to allow air to flow from outside the cooking apparatus 1 to the space between the inner casing 21 and the outer casing 22 by the force of the cooling fan 50. The outer casing 22 comprises outlets 53 to allow the air in the space between the inner and outer casings 21,22 to be discharged to outside the cooking apparatus 1.

The electric heaters 30 are installed facing each other on opposite side walls inside the grill housing 20 below the grill part 10. Heat generated in the electric heaters 30 is transmitted to the grill part 10 by the grill reflecting member 40.

The grill reflecting member 40 comprises an approximately W-shaped plate and is made of metallic materials having a good thermal conductivity and reflectivity so as to efficiently reflect the heat generated from the electric heaters 30 towards the grill part 10.

The grill reflecting member 40 comprises a pair of first reflection faces 42 interconnected at the centre of the grill reflecting member 40, auxiliary reflection faces 46 formed adjacent to each of the first reflection faces 42, and a second reflection face 44 extending across the ends of the first reflection faces 42 and the auxiliary reflection faces 46.

The first reflection faces 42 are disposed in front of the electric heaters 30 and angled so as to thereby reflect the heat generated from the electric heaters 30 to the grill part 10. The auxiliary reflection faces 46 are adjacent to the electric heaters 30 and as such, their temperatures become high while the cooking apparatus 1 is in operation.

The second reflection face 44 is disposed laterally to the heat emitting direction of the electric heaters 30 and is smoothly curved so as to allow the heat generated from the electric heaters 30 to be reflected to the grill part 10.

Hereinbelow, a process of cooling the grill reflecting member 40 and the inside of the grill housing 20 during operation of the above described cooking apparatus 1 will be described.

Referring to Figure 2, when the electric heaters 30 generate heat during operation of the cooking apparatus 1, the grill reflecting member 40 and the inside of the grill housing 20 are heated by the electric heaters 30 and so they are cooled by the cooling fan 50. When the cooling fan 50 operates, the outside air is blown to the underside of the grill reflecting member 40, thereby cooling it. The air flows to the space between the inner and outer casings 21,22 via the through holes 52 formed in the inner casing 21, thereby cooling the grill housing 20. Then, the air is discharged to outside the cooking apparatus 1 via the outlets 53 formed in the outer casing 22. Therefore, in the cooking apparatus according to the present invention, the grill reflecting member 40 and the grill housing 20 are cooled together. Therefore, the cooling efficiency of the cooking apparatus is improved over that of known cooking apparatuses. More particularly, the air blown by the cooling fan 50 impinges directly on the heat reflecting member 40 and is not obstructed by any other components or structures, thereby maximising the cooling effect of the air flow.

Although an embodiment of the present invention has been shown and described, it will be appreciated by those skilled in the art that changes may be made to this embodiment without departing from the principles of the invention, the scope of which is defined in the appended claims hereafter.

## Claims

1. A cooking apparatus (1) comprising a housing (20) a grill (10) supported on the housing(20), at least one heating element (30) provided within the housing (20) below the grill (10), a heat reflecting member (40) being disposed within the housing (20) below the grill (10) to reflect heat from the at least one heating element (30) towards the grill (10), and a cooling fan (50) to draw air from outside the cooking apparatus (1) and blow it toward the heat reflecting member (40) in order to cool the heat reflecting member (40) **characterised by** the housing including an inner casing (21) and an outer casing (22), the inner casing (21) and the outer casing (22) having a space therebetween to define a pathway along which air that has been blown towards the heat reflecting member (40) subsequently flows to be discharged to outside the cooking apparatus (1), thereby cooling the inner casing and the outer casing (21, 22).

2. A cooking apparatus (1) according to claim 1, wherein the fan (50) is disposed below the heat reflecting member (40) to blow air drawn from outside the cooking apparatus (1) towards an underside of the heat reflecting member (40).

3. A cooking apparatus (1) according to claim 1 wherein the heat reflecting member (40) is disposed within the inner casing (21) and the fan (50) is disposed in an aperture (51) extending through the inner casing (21) and the outer casing (22).

4. A cooking apparatus (1) according to claim 3 wherein the inner casing (21) includes a plurality of apertures (52) therethrough such that air blown by the fan (50) can pass from within the inner casing (21) to the space between the inner casing (21) and the outer casing (22).

5. A cooking apparatus according to claim 4 wherein the outer casing (22) includes a plurality of apertures (53) therethrough such that air within the space between the inner casing (21) and the outer casing (22) can be discharged to outside the cooking apparatus (1).

## Patentansprüche

1. Kochvorrichtung (1), die ein Gehäuse (20), einen Rost (10), der von dem Gehäuse (20) getragen wird, wenigstens ein Heizelement (30), das in dem Gehäuse (20) unter dem Rost (10) vorhanden ist, ein wärmereflektierendes Element (40), das in dem Gehäuse (20) unter dem Rost (10) angeordnet ist, um Wärme von dem wenigstens einen Heizelement (30) auf den Rost (10) zu reflektieren, und ein Kühlgebläse (50) umfasst, das Luft von außerhalb der Kochvorrichtung (1) ansaugt und sie auf das wärmereflektierende Element (40) zubläst, um das wärmereflektierende Element (40) zu kühlen, **dadurch gekennzeichnet, dass** das Gehäuse eine innere Verkleidung (21) und eine äußere Verkleidung (22) enthält, wobei sich zwischen der inneren Verkleidung (21) und der äußeren Verkleidung (22) ein Zwischenraum befindet, der einen Weg bildet, auf dem die Luft, die auf das wärmereflektierende Element (40) zugeblasen worden ist, anschließend strömt und aus der Kochvorrichtung (1) nach außen abgeleitet wird, um so die innere Verkleidung und die äußeren Verkleidung (21, 22) zu kühlen.

2. Kochvorrichtung (1) nach Anspruch 1, wobei das Gebläse (50) unter dem wärmereflektierten Element (40) angeordnet ist, um die von außerhalb der Kochvorrichtung (1) angesaugte Luft auf eine Unterseite des wärmereflektierenden Elementes (40) zuzublasen.

3. Kochvorrichtung (1) nach Anspruch 1, wobei das wärmereflektierende Element (40) in der inneren Verkleidung (21) angeordnet ist, und das Gebläse (50) in einer Öffnung (51) angeordnet ist, die sich durch die innere Verkleidung (21) und die äußere Verkleidung (22) hindurch erstreckt.

4. Kochvorrichtung (1) nach Anspruch 3, wobei die innere Verkleidung (21) eine Vielzahl von Öffnungen (52) durch selbige hindurch enthält, so dass Luft, die von dem Gebläse (50) geblasen wird, aus dem Inneren der inneren Verkleidung (21) in den Raum zwischen der inneren Verkleidung (21) und der äußeren Verkleidung (22) gelangen kann.

5. Kochvorrichtung nach Anspruch 4, wobei die äußere Verkleidung (22) eine Vielzahl von Öffnungen (53) durch selbige hindurch enthält, so dass Luft in dem Raum zwischen der inneren Verkleidung (21) und der äußeren Verkleidung (22) aus der Kochvorrichtung (1) nach außen abgeleitet werden kann.

## Revendications

1. Un appareil de cuisson comprenant un boîtier (20), une grille (10) supportée sur le boîtier (20), au moins un élément chauffant (30) prévu à l'intérieur du boîtier (20) au-dessous de la grille (10), un organe réfléchissant la chaleur (40) étant disposé dans le boîtier (20) au-dessous de la grille (10) pour réfléchir la chaleur provenant du au moins un élément chauffant (30) vers la grille (10), et un ventilateur de refroidissement (50) pour aspirer de l'air depuis l'extérieur de l'appareil de cuisson (1) et le souffler vers l'organe réfléchissant la chaleur (40) pour refroidir l'organe réfléchissant la chaleur (40), **caractérisé en ce que** le boîtier comprend un carter intérieur (21) et un carter extérieur (22), le carter intérieur (21) et le carter extérieur (22) ayant entre eux un espace pour définir une voie de passage le long de laquelle de l'air, qui a été soufflé vers l'organe réfléchissant la chaleur (40), s'écoule subséquemment pour être déchargé à l'extérieur de l'appareil de cuisson (1), de manière à refroidir le carter intérieur et le carter extérieur (21, 22).

2. Un appareil de cuisson (1) selon la revendication 1, dans lequel le ventilateur (50) est disposé au-dessous de l'organe réfléchissant la chaleur (40) pour souffler de l'air aspiré depuis l'extérieur de l'appareil de cuisson (1) vers une face inférieure de l'organe réfléchissant la chaleur (40).

3. Un appareil de cuisson (1) selon la revendication 1, dans lequel l'organe réfléchissant la chaleur (40) est disposé à l'intérieur du carter intérieur (21) et le ventilateur (50) est disposé dans une ouverture (51) s'étendant à travers le carter intérieur (21) et le carter extérieur (22).

4. Un appareil de cuisson (1) selon la revendication 3, dans lequel le carter intérieur (21) comprend une pluralité d'ouvertures (52) ménagées à travers lui, de manière que de l'air soufflé par le ventilateur (50) puisse passer, de l'intérieur du carter intérieur (21) vers l'espace se trouvant entre le carter intérieur (21) et le carter extérieur (22).

5. Un appareil de cuisson selon la revendication 4, dans lequel le carter extérieur (22) comprend une pluralité d'ouvertures (53) le traversant, de manière que l'air se trouvant à l'intérieur de l'espace, existant entre le carter intérieur (21) et le carter extérieur (22), puisse être déchargé vers l'extérieur de l'appareil de cuisson (1).
